# EUROPÄISCHE PATENTSCHRIFT

(11) **EP 2 792 052 B1**
(45) Veröffentlichungstag und Bekanntmachung des Hinweises auf die Patenterteilung: **30.03.2016**
(21) Anmeldenummer: 12813256.0
(22) Anmeldetag: 05.12.2012
(51) Int. Cl.: H02K 1/14, H02K 1/17, H02K 19/10, H01F 7/02

(54) **ELEKTRISCHE MASCHINE, INSBESONDERE FÜR LUFTFAHRZEUGE**
ELECTRIC MACHINE, IN PARTICULAR FOR AIRCRAFT
MACHINE ÉLECTRIQUE, EN PARTICULIER POUR AÉRONEFS

(30) Priorität: 16.12.2011 DE 102011121174
(43) Veröffentlichungstag der Anmeldung: 22.10.2014
(73) Patentinhaber: Airbus Defence and Space GmbH, 85521 Ottobrunn (DE)
(72) Erfinder: SANABRIA-WALTER, Christian, 80798 München (DE); HOFMANN, Michael, 85579 Neubiberg (DE); JÄNKER, Peter, 85521 Riemerling (DE)
(74) Vertreter: Kastel, Stefan
(86) Internationale Anmeldenummer: PCT/DE2012/001157
(87) Internationale Veröffentlichungsnummer: WO 2013/087056

(56) Entgegenhaltungen:
- CN-A- 1 645 713
- CN-B- 101 562 384
- CN-B- 101 572 464
- CN-U- 201 466 928

## Beschreibung

Die Erfindung betrifft eine elektrische Maschine in sogenannter Flux-Switching-Bauweise (elektrische Maschine mit Flussumschaltung).

Eine elektrische Maschine ist eine in der elektrischen Energietechnik eingesetzte Maschine. Der Begriff "Elektrische Maschine" wird als Oberbegriff für Energiewandler, welche zwischen elektrischer Energie und mechanischer Energie wandeln (insbesondere Motor oder Generator), verstanden.

Insbesondere betrifft die Erfindung rotierende elektrische Maschinen, zu welchen insbesondere die Elektromotoren und elektrischen Generatoren zählen.

Im Zuge der Diskussion der Verringerung von Treibhausgasen werden alternative Antriebe und Energiekonzepte immer wichtiger. Es wird intensiv an neuen elektrischen Maschinen für unterschiedliche Anwendungen geforscht.

Die Erfindung wendet sich insbesondere elektrischen Maschinen zu, die in oder an Luftfahrzeugen einzusetzen sind.

In CN 1 645 713 A ist eine Doubly-Salient-Permanent-Magnet (kurz: DSPM) Maschine beschrieben. Die DSPM Maschine weist einen Läufer und einen Ständer auf. Die Ständerzähne sind massiv ausgeführt und mit Ständerwicklungen umwickelt. Permanentmagnete spannen jeweils drei Statorzähne in gleicher Richtung vor.

CN 101 572 464 B offenbart eine hybrid erregte Synchron-Maschine, die zusätzlich einen Läufer mit einem Hallbach-Array aufweist. Auf der Läuferoberfläche sind fest definierte Pole ausgebildet, die über elektrische Erregung verstärkt oder geschwächt werden können.

CN 201 466 928 U offenbart eine ebenfalls hybrid erregte Synchron-Maschine, die jedoch anstelle einer feststehenden Erregerspule eine drehende Erregerspule verwendet.

CN 101 562 384 B offenbart eine Flux-Switch-Maschine mit geteilten Polen. Jede zweite Teilung ist mit einem Permanentmagneten bestückt, während die übrigen Teilungen als Luftspalt ausgebildet sind. Die Pole sind von ringförmig angeordneten Permanentmagneten umgeben, die in einer periodischen Abfolge von Nordpol - Luftspalt- Südpol - Luftspalt- nächster Nordpol angeordnet sind. Die Permanentmagnete sind von einem Weicheisen-Joch für den magnetischen Rückschluss umgeben.

Aus der DE 10 2010 021 025 A1 ist beispielsweise ein Hybridantrieb für einen Hubschrauber bekannt, wobei der Hybridantrieb einen ersten Motor, einen zweiten Motor und eine Generatoreinheit aufweist. Der erste Motor ist zum Antreiben der Generatoreinheit ausgeführt und die Generatoreinheit ist zum Erzeugen elektrischer Energie zur Versorgung des zweiten Motors ausgeführt. Bei dem zweiten Motor handelt es sich um eine elektrische Maschine, die zum Antreiben eines Rotors des Hubschraubers ausgeführt ist. Bei dem anzutreibenden Rotor handelt es sich beispielsweise um den Hauptrotor des Hubschraubers oder um den Heckrotor.

Andererseits werden in Luftfahrzeugen, wie z.B. Flugzeugen, elektrische Maschinen zur Erzeugung von elektrischer Energie aus unterschiedlichen Bewegungsenergien benötigt. Insbesondere bei Turbinenantrieben sind hierbei hohe Drehzahlen zu handhaben. Aber auch bei Landfahrzeugen werden immer mehr elektrische Maschinen in Hybridantrieben oder in Elektroantrieben eingesetzt.

Im Zuge der Forschung ist in jüngerer Zeit ein neues Konzept für elektrische Maschinen erstellt worden, welches im Englischen als "flux switched machines" oder "flux switching machines" bezeichnet wird. Ersichtlich gibt es für diese Art von Maschinen noch keinen entsprechenden deutschen Begriff, weswegen im Folgenden der aus dem Englischen entlehnte Begriff "Flux-Switching-Maschinen" verwendet wird.

Es gibt bereits eine ganze Reihe von Literatur zu diesem neuen Konzept elektrischer Maschinen, welche sowohl als Motoren als auch als Generatoren einsetzbar sind. Es wird hier insbesondere auf folgende Literaturstellen verwiesen:
[1] EP 2 045 900 A2
[2] EP 2 002 529 B1
[3] EP 1 602 170 B1
[4] J. T. Chen, Z. Q. Zhu, and Z. P. Xia - "Coil Connections and Winding Factors in Flux-Switching PM Brushless AC Machines" in Ecologic Vehicles - Renewable Energies, Monaco, March 26-29, 2009, einschließlich aller darin zitierter Dokumente
[5] A. Thomas, Z. Q. Zhu, G. W. Jewell and D. Howe; "Flux-switching PM Brushless Machines with Alternative Stator and Rotor Pole Combinations", Journal of Asian Electric Vehicles, Volume 6, Number 1, Juni 2008
[6] Z. X. Fang, Y. Wang, J. X. Shen, Z. W. Huang - Design and Analysis of a Novel Flux-Switching Permanent Magnet Integrated-Starter-Generator, veröffentlicht über Internet (Download am 25.11.2011)
[7] Njǻl Rotevatn: "Design and testing of Flux Switched Permanent Magnet (FSPM) Machines", Master Thesis for Master of Science in Energy and Environment, veröffentlicht im Juni 2009 durch die Norwegische Universität für Wissenschaft und Technik (Norwegian University of Science and Technology).

Wie in [1] ausgeführt ist, sind Flux-Switching-Maschinen als mögliche Option als Hauptenergiequelle für die Luftfahrt identifiziert worden, da sie ein hohes Drehmoment liefern können und einen guten Wirkungsgrad haben. Eine in den oben genannten Literaturstellen als besonders vorteilhaft hervorgehobene Bauart der Flux-Switching-Maschine ist die FSPM-Maschine, abgeleitet aus "Flux Switching Permanent Magnet", also etwa übersetzbar als "elektrische Maschine mit Permanentmagneten und Flussumschaltung". Eine solche elektrische Maschine nach dem Flux-Switching-Prinzip und in der Ausbildung als FSPM-Maschine umfasst einen Ständer (auch als Stator bezeichnet) und einen Läufer (auch als Rotor bezeichnet), Permanentmagnete und Spulen. In der Regel ist der Ständer mit den Permanentmagneten und den Spulen versehen. Hierzu weist der Ständer mehrere in der Regel U- oder C-förmige Ständersegmente auf, die aus magnetisch weichem Material gebildet sind. Zwischen den Schenkeln zweier benachbart angeordneter Segmente sind Dauermagnete so angeordnet, dass jeweils zu einem Segment der gleiche Magnetpol - entweder NORD oder SÜD - gerichtet ist. Ein Ständersegment wird somit auf beiden Seiten durch einen Südpol der Magnete beaufschlagt, während das benachbarte Segment auf beiden Seiten durch jeweils einen Nordpol beaufschlagt wird. Durch die U-förmigen Ständersegmente werden Ständerschlitze ausgeformt, auf denen die Spulen gewickelt sind. Die Spulen dienen insbesondere als Induktions- und Erregerspulen. Bei diesem Aufbau kann der Rotor eine sehr einfache Form ohne Spule und Magnet erhalten; er wird in der Regel aus magnetisch weichem, aber unmagnetisiertem Material hergestellt. Der Rotor weist eine Vielzahl von radial ausgerichteten Zähnen auf, die zum Umschalten des Flusses (flux switching) dienen; siehe hierzu die oben genannten Literaturstellen [1] bis [7].

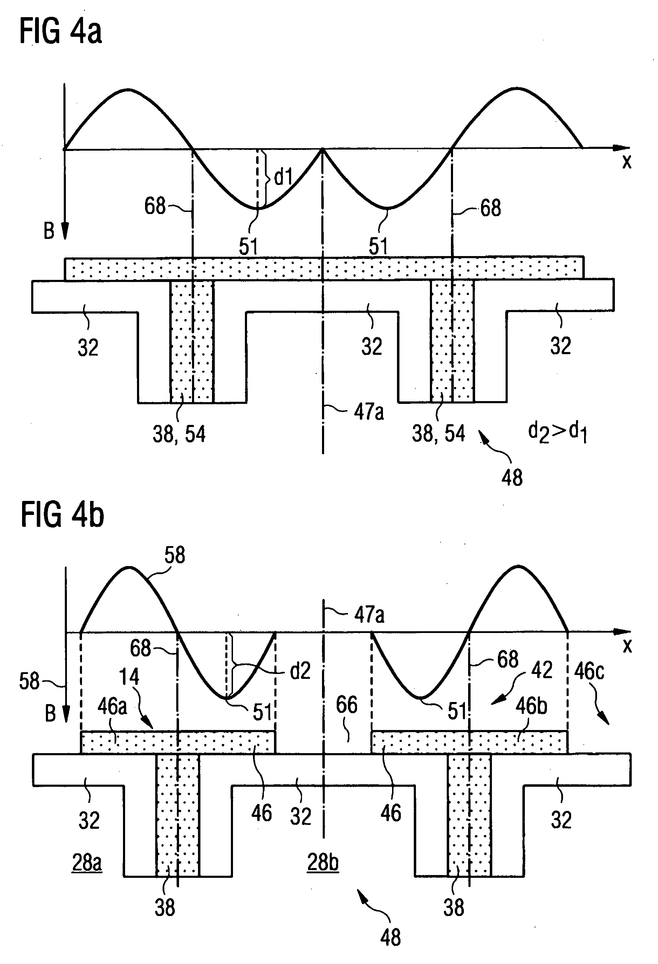

In einem einfachen Fall (siehe [7], Fig. 4 und entsprechende Beschreibung) hat der Stator vier Pole, und Feldspulen und Erregerspulen sind in alternierender Reihenfolge um den Ständer zwischen den Polen gewickelt. Die Feldmagnete sind mit ihren Polen entgegengesetzt zueinander angeordnet, d.h. eines der Ständersegmente liegt zwischen zwei Nordpolen, eines zwischen zwei Südpolen. Der Läufer ist z.B. eine einfache im Profil rechteckige Stange aus magnetischen, aber unmagnetisiertem Eisen. Wenn der Läufer zwischen den Ständerpolen rotiert, verbindet er den Magnetfluss zwischen einem einzelnen Paar entgegengesetzter Pole. Der Magnetkreis des Ständers ist in diesem einfachen Fall, der in [7], Fig. 4, dargestellt ist, ein Paar von Dreiecken, die jeweils ein Magnetfeld, eine Ankerwicklung (Induktionswicklung) und einen gemeinsamen Pfad durch den Läufer aufweisen. Der Magnetfluss reicht so durch ein Magnetfeld des Permanentmagneten und eine Ankerwicklung. Wenn der Läufer sich weiter dreht, wird der andere Dreieckspfad gebildet, was den Fluss von dem einen Paar aus Magnetfeld und Ankerwicklung zu dem anderen Paar umschaltet und damit auch die Richtung des Flusses in der Ankerwicklung reversiert. Durch diese Flussumschaltung wird in der Spule Wechselstrom induziert.

Es ist bekannt, dass in unterschiedlichen Anwendungen in der Luftfahrtindustrie elektrische Motoren zur Elektrizitätserzeugung und zu Antriebszwecken verwendet werden. Aufgrund der Verwendung von eisenhaltigen Materialien in deren Kern können solche elektrische Maschinen eine hohe Kraftdichte an dem Luftspalt zwischen Ständer und Läufer bis zu dem Ausmaß erreichen, wie es durch magnetische Sättigung begrenzt wird. Diese Kraftdichte führt zur Drehmomenterzeugung, wobei das Drehmoment durch die Kraftdichte und die vorgegebene Drehmomentarmlänge zwischen der Drehachse des Läufers und dem Radius des Luftspaltes bestimmt wird. Die magnetische Sättigungsflussdichte der eisenhaltigen Materialien kann nicht willkürlich gewählt werden, sondern ist durch die intrinsisch vorgegebenen Materialeigenschaften festgelegt. Daher könnte zur Vergrößerung des maximalen Drehmoments einer elektrischen Maschine der Luftspaltradius erhöht werden. Jedoch führt diese Maßnahme auch zu einer Vergrößerung der Maschinengröße. Das gleiche Prinzip gilt auch für FSPM-Maschinen, wo das Magnetmaterial in dem Ständer aufgenommen ist.

Nachteile bekannter FSPM-Maschinen sind, dass sie nur eine begrenzte Drehmomentdichte pro Volumen aufweisen, dass die Magnete aufgrund ihrer Position Wirbelstromverlusten unterliegen und dass die Magnete möglicherweise überhitzt werden können, wenn es kein ausreichendes Temperaturmanagement gibt.

Aufgabe der Erfindung ist es, eine verbesserte elektrische Maschine zur besonderen Verwendbarkeit in der Luftfahrt zu schaffen, die sowohl für hohe Drehzahlen als auch für hohe Drehmomente besser als bisher bekannte Maschinen geeignet ist.

Diese Aufgabe wird durch den Gegenstand des Anspruches 1 gelöst.

Vorteilhafte Ausgestaltungen der Erfindung sind Gegenstand der Unteransprüche.

Vorteilhafte Verwendungen der elektrischen Maschine sind in den weiteren Ansprüchen angegeben.

Die Erfindung schafft eine (rotierende) elektrische Maschine mit einer Flux-Switching-Maschineneinheit, die als FSPM-Maschine mit Permanentmagnete aufweisenden Magnetpolen ausgebildet ist, und mit einer sich in Umfangsrichtung erstreckenden Permanentmagnetanordnung, wobei die sich in Umfangsrichtung erstreckende Permanentmagnetanordnung durch eine sich in Umfangsrichtung erstreckend ausgebildete Halbach-Array-Anordnung gebildet ist, wobei die Halbach-Array-Anordnung mehrere Halbach-Arrays aufweist und jeweils ein Halbach-Array mit einer Gesamtlänge einer Wellenlänge pro Magnetpol (26) vorgesehen ist.

Besonders bevorzugt ist, dass FSPM-Maschine mit Läufer und Ständer einschließlich der Permanentmagnetpolen sowie Spulenwindungen versehen ist, wobei die sich in Umfangsrichtung erstreckende Permanentmagnetanordnung und/oder die Halbach-Array-Anordnung an der FSPM-Maschine zur Verstärkung des Magnetflusses der Permanentmagnetpole angebracht ist.

Vorzugsweise ist vorgesehen, dass die Halbach-Array-Anordnung, die sich in Umfangsrichtung erstreckende Permanentmagnetanordnung und/oder die Flux-Switching-Maschineneinheit ringförmig ausgebildet sind. Insbesondere ist ein die Permanentmagnetanordnung und/oder die Halbach-Array-Anordnung aufweisender Ständer ringförmig ausgebildet.

Bei einer vorteilhaften Ausgestaltung ist vorgesehen, dass die Permanentmagnetanordnung und/oder die Halbach-Array-Anordnung um die Flux-Switching-Maschineneinheit herum angeordnet sind.

Es ist bevorzugt, dass die elektrische Maschine als Innenläufermaschine ausgebildet ist, wobei ein Läufer innerhalb eines Ständers läuft, der die sich in Umfangsrichtung erstreckende Permanentmagnetanordnung und/oder die Halbach-Array-Anordnung aufweist.

Vorzugsweise ist vorgesehen, dass der Radius des Läufers mehr als 65%, insbesondere zwischen ca. 75% und 80%, des Gesamtradius des Ständers beträgt.

Besonders bevorzugt ist, dass ein Ständer mit mehreren, insbesondere im Wesentlichen U-förmigen, Ständersegmenten aus magnetisch weichem Material mit Magneten dazwischen derart vorgesehen ist, dass die Magnete auf den beiden Seiten jedes Ständersegments mit Polen gleicher Polarität zu dem Ständersegment gerichtet sind, wobei die Halbach-Array-Anordnung mit gleicher Polarität entlang der Ständersegmente erstreckend angeordnet ist.

Gemäß einer vorteilhaften Ausgestaltung ist vorgesehen, dass ein Ständer mit mehreren Ständerpolen und Ständerschlitzen zur Aufnahme von Spulen vorgesehen ist und dass die Halbach-Array-Anordnung mehrere Halbach-Arrays aufweist.

Besonders bevorzugt ist, dass das Halbach-Array pro Ständerpol sich von der Mitte eines Ständerschlitzes über einen Magneten des Ständerpols hinweg bis zu der Mitte des benachbarten Ständerschlitzes erstreckt. Vorzugsweise ist das Halbach-Array um die Ständerpolachse zentriert. Die Länge des Halbach-Arrays kann zwischen 25 und 100% der Länge des Ständerpols betragen. Wenn die Länge des Halbach-Arrays mit einer gesamten Wellenlänge der Länge des Ständerpols entspricht, grenzt jedes Halbach-Array auf beiden Seiten an das jeweils benachbarte Halbach-Array an. Es sind aber auch kleinere Längen von Halbach-Arrays mit entsprechend kürzeren Wellenlängen denkbar. Ein Vorteil von Hallbach-Arrays, die nur eine Teillänge der Ständerpollänge überdecken ist der reduzierte Verbrauch von Magnetmaterial bei gleichem gesamten Magnetfluss. Der optimale Wert bei einer bestimmten Konfiguration kann durch Optimierungsrechnungen (maximaler Magnetfluss bei minimalem Magnetmaterial). Es sind auch unterschiedliche Halbach-Array-Längen bei der gleichen Maschine (z.B. unterschiedliche Halbach-Array-Längen bei benachbarten Ständerpolen) denkbar; es sind Kombinationen von Halbach-Arrays verschiedener Länge (Wellenlänge) möglich.

Bevorzugt ist vorgesehen, dass das Halbach-Array pro Ständerpol zentriert zu einer durch das Zentrum eines Magneten des Ständerpols definierten Ständerpolachse oder Ständerpolmitte angeordnet ist.

Es ist bevorzugt, dass die Umfangslänge des Halbach-Arrays pro Ständerpol ca. zwischen einschließlich 25% bis 100% der Umfangslänge des zugeordneten Ständerpols beträgt, insbesondere ca. 35% bis 90%, mehr insbesondere ca. 45% bis 75%.

Vorzugsweise ist vorgesehen, dass das Halbach-Array pro Ständerpol sich von der Mitte eines Ständerschlitzes über einen Magneten des Ständerpols hinweg bis zu der Mitte des benachbarten Ständerschlitzes erstreckt und auf beiden Seiten an das jeweils benachbarte Halbach-Array angrenzt.

Weiter schafft die Erfindung gemäß weiteren Aspekten davon einen elektrischen Generator oder elektrischen Motor, der als eine derartige elektrische Maschine, wie zuvor erläutert, ausgebildet ist.

Weiter werden ein Luftfahrzeug mit einer derartigen elektrischen Maschine, ein Hybridantrieb für ein Luftfahrzeug, insbesondere für einen Hubschrauber, mit einer solchen elektrischen Maschine sowie ein mit einem solchen Hybridantrieb versehener Hubschrauber vorgeschlagen.

Die Erfindung schlägt insbesondere die Kombination einer Flux-Switching-Maschineneinheit mit einem Halbach-Array vor.

Ein Halbach-Array ist eine spezielle Konfiguration von Permanentmagneten. Eine solche Konfiguration ermöglicht, dass sich der magnetische Fluss an der einen Seite der Konfiguration fast aufhebt, auf der anderen Seite jedoch verstärkt.

Gemäß eines ersten Aspekts der Erfindung ist eine als Flux-Switching-Maschine ausgebildete Maschineneinheit mit einer solchen Halbach-Array-Anordnung versehen. Durch eine solche Halbach-Array-Anordnung lässt sich eine vorgegebene Magnetwirkung mit einer geringeren Menge Magnetmaterial im Ständer erreichen.

Gemäß eines anderen Aspekts ist eine Flux-Switching-Maschineneinheit mit einer sich in Umfangsrichtung erstreckenden Permanentmagnetanordnung versehen.

Insbesondere lässt sich Magnetmaterial von Permanentmagneten, die als Polmagnete einer FSPM-Maschine eingesetzt werden, durch eine sich in Umfangsrichtung erstreckende Permanentmagnetanordnung anders verteilen. Dadurch lässt sich eine Geometrie der elektrischen Maschine derart erreichen, dass der Radius eines Luftspaltes zwischen Ständer und Läufer vergrößert werden kann, ohne die Maschinengröße zu vergrößern.

Besonders bevorzugt ist eine sich in Umfangsrichtung erstreckende Halbach-Array-Anordnung vorgesehen, die zur Verstärkung des Magnetflusses der Permanentmagnetpole einer FSPM-Maschine angeordnet sind.

Durch die reine Modifikation der Geometrie lässt sich damit das maximal erreichbare Drehmoment einer FSPM-Maschine bei gleichbleibendem Maschinenvolumen erhöhen. Bei dieser Maschinenart sind Permanentmagnete der Magnetpole in dem Ständer eingebettet. Für ein konstantes Maschinenvolumen ergibt sich bisher das maximale Drehmoment aus dem Kompromiss zwischen der Läufergröße, d.h. dem Läuferradius, und der Menge von Magnetmaterial in dem zur Verfügung stehenden Ständervolumen. Wenn bei üblichen derzeit bekannten Bauarten von FSPM-Maschinen der Läuferradius erhöht wird, um das Drehmoment zu erhöhen, muss bei gleichbleibenden Maschinendimensionen die Menge von Magnetmaterial reduziert werden, bis ein maximales Drehmoment erreicht ist. Ein weiteres Erhöhen des Läuferradius führt zu weniger Drehmoment, da es aufgrund des reduzierten Magnetmaterials zu einer geringeren Anregung von Magnetfluss kommt. Deswegen kann trotz Erhöhung der Läuferhebellänge und Vergrößerung des gesamten Luftspaltbereiches keine weitere Drehmomenterhöhung bei gleichbleibendem Volumen erreicht werden.

Mit der Erfindung oder deren vorteilhaften Ausgestaltung lässt sich jedoch der optimale Radius noch größer über den bisher erreichbaren für maximales Drehmoment optimalen Radius hinaus vergrößern, um so noch mehr Drehmoment zu erhalten, ohne das Gesamtvolumen zu erhöhen.

Halbach-Arrays sind grundsätzlich bekannt. Es ist bekannt, dass die Flussdichte von Magneten unter anderem von dem Magnetkreis abhängen, an dem die Magnete teilnehmen. Bei Vorliegen eines magnetischen Kurzschlusses arbeitet ein Magnet bei einer maximalen Flussdichte, die gleich ist seiner remanenten Flussdichte, was eine intrinsische Eigenschaft des Magnetmaterials darstellt.

In elektrischen Maschinen ist die Betriebsflussdichte der Magnete geringer als die remanente Flussdichte, da im Betrieb praktisch niemals ein magnetischer Kurzschluss auftritt. Jedoch können Konzentrationstechniken eingesetzt werden, um Magnetflussdichten an dem Luftspalt zu erreichen, die vergleichbar oder höher sind als die remanente Flussdichte. Eine mögliche Technik zum Fokussieren des Flusses ist die Verwendung von Halbach-Arrays, was nicht nur für elektrische Maschinen gilt, sondern auch in zahlreichen anderen Anwendungen eingesetzt werden kann. Ein Halbach-Array ist ein einseitiger Permanentmagnet mit mehreren Polen. Halbach-Arrays sind eine gut bekannte Technologie, die zur Fabrikation von Magneten eingesetzt wird, wobei eine Seite des Arrays ein starkes Magnetfeld darstellt, während die andere Seite ein schwächeres Magnetfeld aufweist, wobei Flussdichten höher als die remanente Flussdichte des verwendeten Magnetmaterials erreichbar sind.

Ausführungsbeispiele der Erfindung werden hiernach anhand der Zeichnungen näher erläutert. Dabei zeigen:

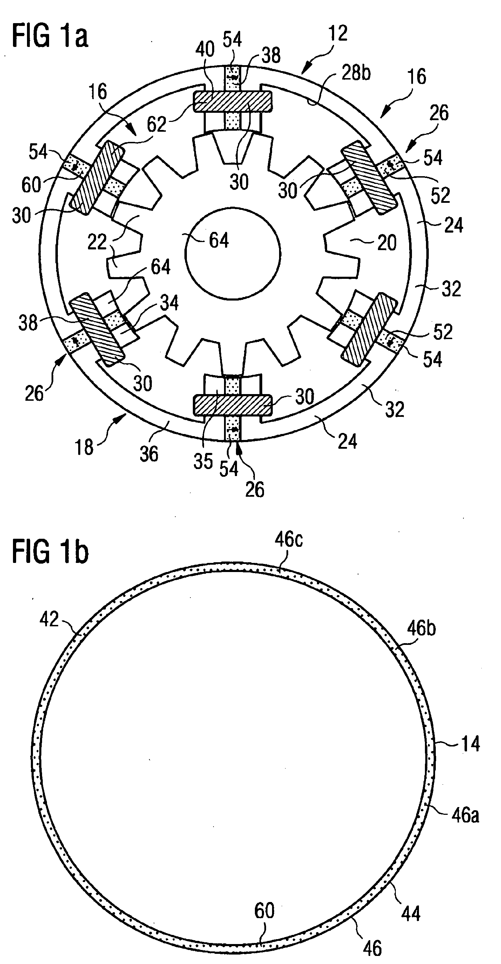

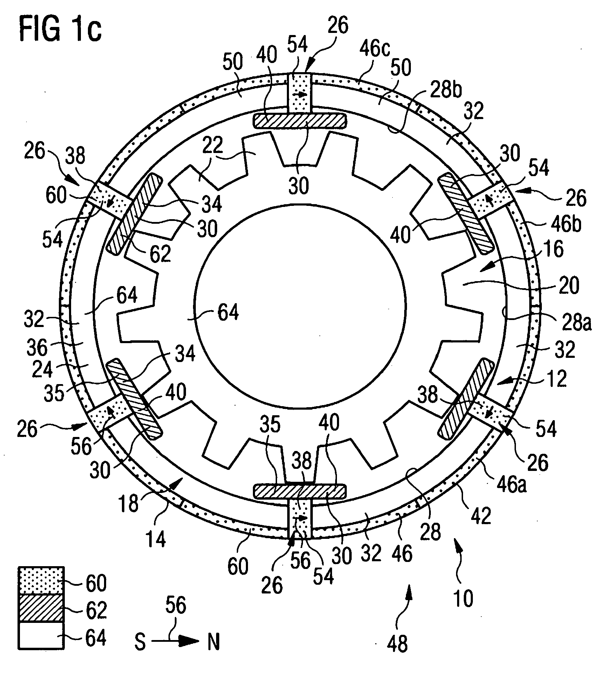

- Fig. 1: eine schematische Übersichtdarstellung einer Kombination einer FSPM-Maschine mit einem kreisförmigen Halbach-Magnet-Array zu einer FSPM-Halbach-Maschine mit bei gleichem Volumen vergrößertem Rotorradius und höherem Drehmoment, wobei
- Fig. 1a: eine bekannte FSPM-Maschine als Ausgangspunkt,
- Fig. 1 b: eine sich in Umfangsrichtung erstreckende Permanentmagnetanordnung, z.B. ausgebildet als Halbach-Array-Anordnung, und
- Fig. 1 c: die Kombination der in den Fig. 1 a und 1 b gezeigten Strukturen zeigt;
- Fig. 2: eine schematische Darstellung des Magnetflusses in Statorpolen ohne Halbach-Array;
- Fig. 3: eine schematische Darstellung des Magnetflusses mit Halbach-Array;
- Fig. 4: einen Vergleich unterschiedlicher Halbach-Array-Anordnungen, wobei
- Fig. 4a: eine Ausführungsform, bei der die Länge eines Halbach-Arrays pro Ständerpol 100% der Ständerpollänge entspricht und
- Fig. 4b: eine Ausführungsform, bei der die Länge eines Halbach-Arrays pro Ständerpol weniger als die Ständerpollänge beträgt.

In der Fig. 1 ist dargestellt, wie eine elektrische Maschine 10 aus einer Flux-Switching-Maschineneinheit 12 und einer sich in Umfangsrichtung erstreckenden Permanentmagnetanordnung 14 gebildet ist. Dabei ist die Flux-Switching-Maschineneinheit 12 in Fig. 1a, die Permanentmagnetanordnung 14 in Fig. 1b und die durch Kombination daraus gebildete elektrische Maschine 10 in Fig. 1c dargestellt.

Die Flux-Switching-Maschineneinheit 12 ist als elektrische Maschine mit Flussumschaltung ausgebildet, wie sie in einer der oben genannten Literaturstellen [1] bis [7] näher gezeigt und erläutert ist.

Zum Beispiel ist die Flux-Switching-Maschineneinheit 12 als FSPM-Maschine 16 (Flussumschaltung, engl. "flux-switching", mit Permanentmagneten) ausgebildet.

Die FSPM-Maschine 16 ist als Innenläufermaschine 18 mit einem aus magnetisch weichem Material 64 gebildeten inneren Läufer 20 ohne Spulen oder Magnete, aber mit einer Reihe von sich in Radialrichtung nach außen erstreckenden Zähnen 22 ausgebildet ist, die zum Bilden von Magnetflüssen durch Segmente der Flux-Switching-Maschineneinheit 12 ausgebildet sind Die Innenläufermaschine 18 weist einen äußeren Ständer 24 auf, der Magnetpole 26 und Ständerschlitze 28 zur Aufnahme von Spule 30 aufweist und den Läufer 20 außenseitig umgibt.

Zum Bilden der Ständerschlitze 28 sind jeweils etwa U-förmige oder C-förmige Ständersegmente 32 vorgesehen. Die Ständersegmente 32 weisen jeweils sich in Radialrichtung erstreckende Schenkel 34, 35 mit einem sich in Umfangsrichtung erstreckenden Steg 36 auf und sind insgesamt aus magnetisch weichem Material 64, wie z.B. eisenhaltigem Material, gebildet.

Zum Bilden der Magnetpole 26 sind jeweils zwischen den Ständersegmenten 32 Magnete 54, insbesondere Permanentmagnete 38 aus Magnetmaterial 60, vorgesehen. Die Permanentmagnete 38 sind derart ausgebildet und angeordnet, dass eine erste Gruppe von Ständersegmenten 32 an seinen beiden Schenkeln 34, 35 mit Nordpolen der Permanentmagnete 38 in Kontakt kommen und eine zweite Gruppe von Ständersegmenten 32 nur mit den Südpolen der Permanentmagnete 38 in Kontakt kommen.

Die Spulenwindungen 40 der in den Figuren nur schematisch angedeuteten Spulen 30 sind auf die Stege 36 der Ständersegmente 32 gewickelt, um bei durch Rotieren des Läufers 20 erfolgender Flussumschaltung einen Wechselstrom zu erzeugen. Die Spulenwindungen 40 sind aus geeignetem Windungsmaterial 62 (z.B. Kupfer) gebildet. Es wird für nähere Einzelheiten und den genauen Aufbau verschiedener Ausführungsbeispiele der an sich bekannten FSPM-Maschine 16 auf die Literaturstellen [1], [2] und [4] bis [7] verwiesen, wo auch die Ausbildung und Anordnung der Spulen 30 mit Spulenwindungen 40 genauer beschrieben sind.

Mit diesen bekannten FSPM-Maschinen 16 lässt sich bei gegebenem Gesamtradius der Innenläufermaschine 18, der durch den Außenradius des Ständers 24 gebildet ist, ein maximales Drehmoment dann erreichen, wenn der Radius des Läufers 20 etwa 60-65% des Gesamtradius beträgt. Bei einer Verringerung des Läuferradius gegenüber diesem Wert verringert sich der Radius des Luftspaltes zwischen Läufer 20 und Ständer 24 und damit der Drehmomenthebelarm, mit welchem das Drehmoment erzeugt wird. Bei einer Vergrößerung des Läuferradius in der in Fig. 1 gezeigten konventionellen Konfiguration muss sich bei gleichbleibendem Gesamtradius die Menge des Magnetmaterials der Permanentmagnete 38 verringern. Bei den üblichen FSPM-Maschinen lässt sich somit durch Vergrößerung des Läuferradius zum Maschinenradius über ca. 60-65% hinaus keine Drehmomenterhöhung erreichen.

Bei den Ausführungsbeispielen der Erfindung ist dagegen zur Verstärkung der Wirkung der Permanentmagnete 38 der Magnetpole 26 die sich in Umfangsrichtung erstreckende Permanentmagnetanordnung 14 vorgesehen, welche in Fig. 1 b dargestellt ist.

Bei der sich in Umfangsrichtung erstreckenden Permanentmagnetanordnung 14 handelt es sich vorzugsweise um eine kreisförmig ringförmig, z.B. ringförmig geschlossene, Anordnung. Besonders bevorzugt ist die Permanentmagnetanordnung 14 als Halbach-Array-Anordnung 42 ausgebildet. Vorzugsweise ist eine Ringanordnung 44 aus mehreren Halbach-Arrays 46, 46a, 46b gebildet, die so angeordnet und ausgerichtet sind, dass sie die Permanetmagnete 38 der Magnetpole 26 verstärken. Hierzu sind die Halbach-Arrays 46, 46a, 46b derart ausgerichtet, dass die Seite mit der stärkeren Magnetwirkung radial nach innen gerichtet ist und die Magnetwirkung so ausgerichtet ist, dass sie die Wirkungen der Permanentmagnete 38 der Magnetpole 26 verstärkt.

Dies führt dazu, dass, wie in Fig. 1c angedeutet, bei gleichem oder gar vergrößertem Magnetfluss durch die Kombination der sich in Umfangsrichtung erstreckenden Permanentmagnetanordnung 14 mit den Permanentmagneten 38 der Magnetpole 26 eine geringere radiale Ausdehnung des Ständers 24 möglich ist. Der Innenradius des Ständers 24 kann bei gleichem Außenradius und wenigstens gleicher Magnetwirkung größer gemacht werden, so dass der Radius des Läufers 20 größer gemacht werden kann.

Die in Fig. 1c gezeigte elektrische Maschine 10 ist somit als FSPM-Halbach-Maschine 48 ausgebildet, wobei bei gegebenem Maschinenvolumen ein größeres maximales Drehmoment als bei der in Fig. 1 a gezeigten üblichen Anordnung einer FSPM-Maschine 16 erreichbar ist. Zum Beispiel lässt sich ohne Beeinträchtigung der Magnetwirkung an dem Ständer 24 ein Läuferradius erreichen, der 75-80% des Gesamtradius der elektrischen Maschine 10 beträgt.

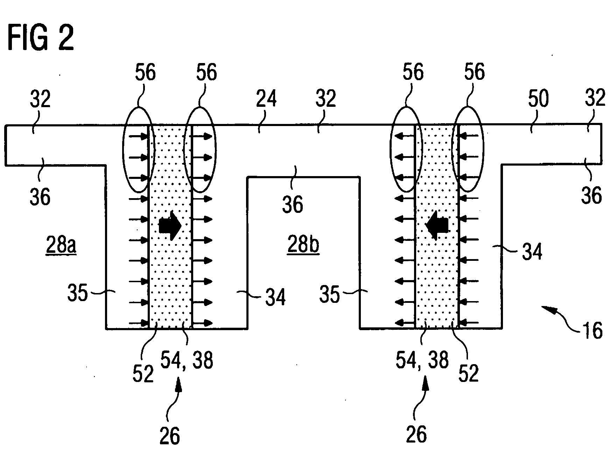

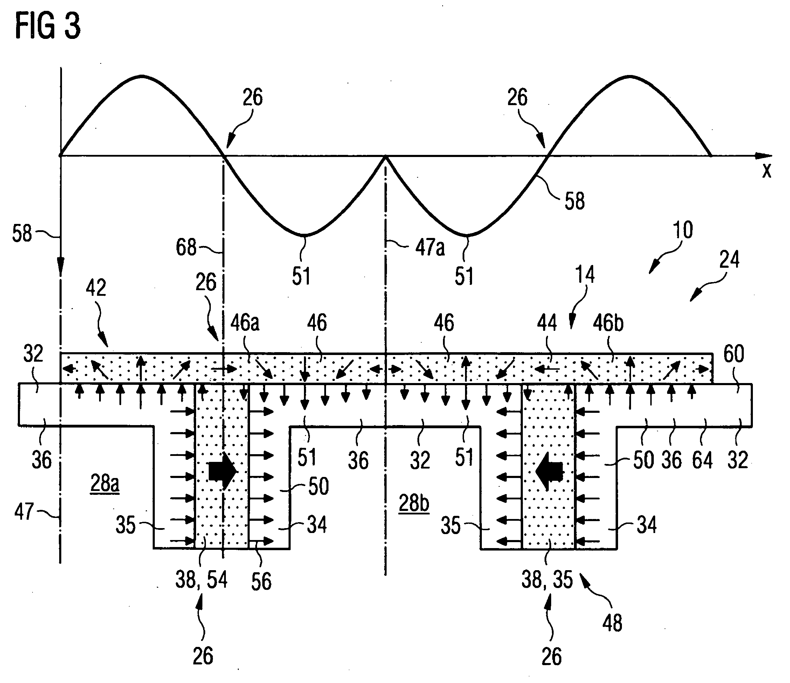

In Fig. 2 ist der magnetische Fluss im Bereich der Ständerschlitze 28 bei der in Fig. 1 a gezeigten konventionellen Anordnung dargestellt; im Vergleich hierzu ist in Fig. 3 der magnetische Fluss bei der in Fig. 1c dargestellten elektrischen Maschine 10 im Bereich der Ständerschlitze 28 in Verbindung mit einer graphischen Darstellung der magnetischen Felddichte 58 dargestellt. Die gleiche magnetische Felddichte 58 wie bei Fig. 2 lässt sich mit der Anordnung in Fig. 3 mit einer geringeren Gesamtausdehnung des Ständers 24 in Radialrichtung erreichen.

In Fig. 3 ist außerdem eine erste Ausführungsform einer vorteilhaften Anordnung der Halbach-Arrays 46, 46a, 46b in der Halbach-Array-Anordnung 42 relativ zu den Magnetpolen 26 dargestellt.

In Fig. 4 werden diese erste Ausführungsform in Fig. 4a mit einer zweiten Ausführungsform der Halbach-Array-Anordnung 42 mit in Umfangsrichtung kürzeren Halbach-Arrays 46a, 46b, 46c zusammen mit der Darstellung der magnetischen Felddichte 58 verglichen

Mit der in Fig. 1c dargestellten Anordnung kann für die FSPM-Maschine 16 der optimale Läuferradius zum Erreichen eines maximalen Drehmoments von derzeit 60-65% des Gesamtmaschinenradius bis auf derzeit ca. 80% des Gesamtmaschinenradius erhöht werden. Dies wird bei den dargestellten Beispielen erreicht durch Umwickeln der Flux-Switching-Maschineneinheit 12 mit der Halbach-Array-Anordnung 42 und Reduzierung der Magnetgröße der in dem Ständer 24 eingebetteten Magnete 54, beispielsweise Permanentmagnete 38. Die Verringerung der Magnetgröße ist leicht aus einem Vergleich der Fig. 2 und 3 ersichtlich. Dadurch lässt sich als Folge der für die Drehmomenterzeugung mögliche Luftspaltbereich vergrößern, so dass sich als weitere Folge auch das maximale Drehmoment der elektrischen Maschine 13 vergrößern lässt.

Die Halbach-Array-Anordnung 42 hat insbesondere die Funktion einer Kompensierung des aufgrund der Vergrößerung des Läuferradius sich ergebenden reduzierten magnetischen Flusses. Mit anderen Worten wird die Reduzierung des Magnetmaterials 60 durch die in Umfangsrichtung erstreckende Permanentmagnetanordnung 14 erzielt. Wenngleich das Umgeben der Flux-Switching-Maschineneinheit 12 mit der sich in Umfangsrichtung erstreckenden Magnetanordnung 14 gegenüber einer reinen FSPM-Maschine 16 in der Tat zu einer Vergrößerung des Volumens der Maschine führt, da neues Material hinzugefügt wird, ist das resultierende Überschussvolumen bei geschickter Anordnung und Ausbildung der sich in Umfangsrichtung erstreckenden Permanentmagnetanordnung 14 vernachlässigbar.

Vorzugsweise wird die Flusskompensierung in der im Folgenden anhand von Fig. 1c und Fig. 3 sowie Fig. 4 erläutern Art und Weise durchgeführt.

Wie aus Fig. 1c und Fig. 3 ersichtlich, ist der Ständer 24 aufgebaut aus U-förmigen Materialstücken 50 aus Weichmagnetmaterial, wobei an jedem Materialstück 50, welche hier die Ständersegmente 32 bilden, Magnete 54 an den Seiten 52 angebracht sind. Die vorzugsweise als Permanentmagnete 38 ausgebildeten Magnete 54 zeigen mit der gleichen Magnetpolfläche zu dem z.B. aus Eisen gebildeten Materialstück 50; entweder sind beide Nordpole zu dem Materialstück 50 gerichtet oder beide Südpole. Das durch die Permanentmagnetanordnung 14 geschaffene in Fig. 3 durch Magnetflusslinien 56 angedeutete Magnetfeld ist zum Erreichen einer Verstärkung der Magnetwirkung der Magnete 54 mit gleicher Polarität anzuordnen. Fig. 3 und Fig. 4 zeigen hierbei zwei Ausführungsbeispiele, mit denen eine solche Anordnung mit einer minimalen Verwendung von Magnetmaterial 60 erzielt werden kann. Hierzu wird je ein Halbach-Array 46 mit einer Gesamtlänge einer einzelnen Wellenlänge (Wellenlänge der magnetischen Felddichte 58 in Umfangsrichtung x) pro Ständerpol - Magnetpol 26 - in solch einer Weise eingesetzt, dass dessen Polarität die gleiche Polarität wie die hier vorhandenen Magnete 54 aufweist. Das Halbach-Array 46a beginnt in der Mitte 47 des jeweiligen Ständerschlitzes 28a, wobei die Nullfeld-Polaritätsschaltposition des Halbach-Arrays 46a mit der Position des Ständer-Permanentmagneten 38 - insbesondere der mittigen Ständerpolachse 68 - zusammenfällt; und das Halbach-Array 46 endet in der Mitte 47a des benachbarten Ständerschlitzes 28b. Das nächste Halbach-Array 46b, das dem nächsten Ständerpol - Magnetpol 26 -zugeordnet ist, beginnt bei der in Fig. 3 und Fig. 4a dargestellten ersten Ausführungsform an dem Punkt, wo das vorherige Halbach-Array 46a endet, wobei die Polarität der ersten Hälfte des benachbarten Halbach-Arrays 46b die gleiche ist wie die Polarität der zweiten Hälfte des zuvorgehenden Halbach-Arrays 46a. Die sich daraus ergebende Modulation des gesamten Halbach-Magnetfeldes bewirkt dann eine Phasenumkehr von 180° nach jeder Wellenlänge in der Mitte 47, 47a jedes Ständerschlitzes 28, 28a, 28b.

In der Fig. 4b ist noch eine zweite Ausführungsform dargestellt, bei der die Länge des Halbach-Arrays 46a, 46b, 46c, die der Länge einer Wellenlänge entspricht, nicht gleich 100% der Länge des zugehörigen Ständerpols - Magnetpol 26 - sondern kleiner ist, insbesondere zwischen 25% und 100%, z.B. ca. 30%, ca. 40%, ca. 50%, ca. 60%, ca. 70%, ca. 80%, ca. 90% oder ca. 95% der Ständerpollänge beträgt. Z.B. ist zwischen benachbarten entsprechend in Umfangsrichtung kürzer ausgeführten Halbach-Arrays 46a, 46b, 46c je eine Lücke 66 gebildet, die frei bleiben kann oder durch geeignetes Füllmaterial (nicht dargestellt) ausgefüllt sein kann.

Wie in Fig. 4 als Vergleich dargestellt, kann bei kürzerem Halbach-Array (Fig. 4b) eine verkürzte Wellenlänge mit größerer Felddichte d2 im Maximum 51 als die Felddichte d1 im Maximum 51 der Felddichte des längeren Halbach-Arrays (Fig. 4a) erreicht werden (d2>d1). Die zum Erreichen des Optimums bezüglich geringster Menge an Magnetmaterial und maximaler Magnetwirkung bei gegebenem Maschinenvolumen optimalen relative Umfangslänge des Halbach-Arrays 46, 46a, 46b, 46c zur Umfangslänge des zugeordneten Ständerpols kann je nach Maschinenkonfiguration unterschiedlich sein und kann durch Optimierungsrechnungen ermittelt werden.

Es ist auch denkbar, dass die Halbach-Arrays 46a, 46b, 46c unterschiedlich lang sind, z.B. das erste Halbach-Array 46a 100% der Ständerpollänge, das zweite Halbach-Array 46b 80% der Ständerpollänge und das dritte Halbach-Array 60% der Ständerpollänge beträgt; alle genannten Werte sind nur Beispielwerte, die beliebig anpassbar sind. Bei unterschiedlichen Halbach-Array-Längen und entsprechend

Mit der in Fig. 1c, 3 und 4 dargestellten Ausgestaltung und deren Ausführungsformen lassen sich insbesondere folgende Vorteile erzielen:
- Die in Fig. 1c gezeigte Anordnung zeigt gegenüber der in Fig. 1a gezeigten bisher üblichen Anordnung eine erhöhte Drehmomentdichte pro Volumen, d.h. ein erhöhtes maximales Drehmoment für einen gegebenen Maschinendurchmesser.
- Das meiste Magnetmaterial 60 ist nun entfernt von der Haupthitzequelle in einer elektrischen Maschine 10, d.h. den Spulenwindungen 40, angeordnet. Dies macht die Gefahr einer Demagnetisierung aufgrund einer Überhitzung weniger wahrscheinlich und ermöglicht ein einfacheres und effizienteres Kühlsystem (nicht dargestellt).
- Ein einfacheres und effizienteres Kühlsystem für die Halbach-Array-Anordnung 42 eröffnet die Möglichkeit der Nutzung höherwertigerer Permanentmagnete 38, was zu einer Reduzierung des Maschinengewichts und einer Reduzierung der Verwendung von Magnetmaterial 60 führen kann.
- Potentielle Fehlertoleranzen des meisten des Magnetmaterials 60 können nun besonders vorteilhaft handgehabt werden, da das meiste Magnetmaterial 60 nun an der äußeren Oberfläche der elektrischen Maschine 10 sitzt, wo es leicht mechanisch oder thermisch manipuliert werden kann, um für einen ausfallsicheren Betrieb zu sorgen.
- Weiter ist eine potentielle Gewichtsreduktion möglich, wenn ein größerer Läufer 20 verwendet wird, da die Verlagerung der aktiven Eisenmasse des Läufers 20 hin zu der Außenseite der Maschine 10 die Möglichkeit eröffnet, weniger Eisen in dem Zentrum der Maschine 10 zu verwenden.

Die Erfindung ist insbesondere anhand von Ausführungsbeispielen erläutert worden, die eine FSPM-Maschine 16 als Flux-Switching-Maschineneinheit 12 nutzen. Jedoch ist die Erfindung nicht auf eine solche Ausführung beschränkt. Z.B. lassen sich anstelle der Verwendung von Permanentmagneten 38 als in dem Ständer 24 eingebetteten Magneten im Prinzip auch Elektromagnete als Magnete 54 zum Bilden der Magnetpole 26 einsetzen. Ein Beispiel für eine verwendbare Flux-Switching-Maschineneinheit 12 mit derartigen Magnetpolen 26 ist in der Literaturstelle [3], EP 1 602 170 B1 erläutert. Es wird für weitere Einzelheiten zu einer solchen alternativen Ausführung ausdrücklich auf die Literaturstelle EP 1 602 170 B1 verwiesen.

Die in den Ausführungsbeispielen dargestellte elektrische Maschine 10 lässt sich insbesondere zum Aufbau eines Hubschrauber-Hybridantriebes nutzen, wie er in der DE 10 2010 021 025 A1 beschrieben und gezeigt ist. Es wird ausdrücklich für weitere Einzelheiten zu dem Hybridantrieb auf diese Druckschrift DE 10 2010 021 025 A1 verwiesen, die hiermit durch Bezugnahme inkorporiert wird.

Eine weitere interessante mögliche Verwendung der elektrischen Maschine 10 ist ein Einsatz als elektrischer Generator für Luftfahrzeuge, insbesondere Flugzeuge.

### Bezugszeichenliste

- 10: Elektrische Maschine
- 12: Flux-Switching-Maschineneinheit
- 14: sich in Umfangsrichtung erstreckende Permanentmagnetanordnung
- 16: FSPM-Maschine
- 18: Innenläufermaschine
- 20: Läufer
- 22: Zähne
- 24: Ständer
- 26: Magnetpol
- 28: Ständerschlitz
- 28a: Ständerschlitz
- 28b: Ständerschlitz
- 30: Spule
- 32: Ständersegment
- 34: erster Schenkel
- 35: zweiter Schenkel
- 36: Steg
- 38: Permanentmagnet
- 40: Spulenwindungen
- 42: Halbach-Array-Anordnung
- 44: Ringanordnung
- 46: Halbach-Array
- 46a: Halbach-Array
- 46b: Halbach-Array
- 47: Mitte des Ständerschlitzes
- 47a: Mitte des Ständerschlitzes
- 48: FSPM-Halbach-Maschine
- 50: Materialstück
- 51: Maximum der magnetischen Felddichte B
- 52: Seite
- 54: Magnet
- 56: Magnetflusslinien
- 58: Magnetische Felddichte (B)
- 60: Magnetmaterial
- 62: Windungsmaterial (z.B. Kupfer)
- 64: magnetisch weiches Material (z.B. Elektrostahl)
- 66: Lücke
- 68: Ständerpolachse

## Patentansprüche

1. Elektrische Maschine (10) mit einer Flux-Switching-Maschineneinheit (12), die als FSPM-Maschine (16) mit Permanentmagnete (38) aufweisenden Magnetpolen (26) ausgebildet ist, und mit einer sich in Umfangsrichtung erstreckenden Permanentmagnetanordnung (14),
**dadurch gekennzeichnet,**
**dass** die sich in Umfangsrichtung erstreckende Permanentmagnetanordnung (14) durch eine sich in Umfangsrichtung erstreckend ausgebildete Halbach-Array-Anordnung (42) gebildet ist, wobei die Halbach-Array-Anordnung (42) mehrere Halbach-Arrays (46, 46a, 46b) aufweist und jeweils ein Halbach-Array (46, 46a, 46b) mit einer Gesamtlänge einer Wellenlänge, d.h. Wellenlänge der magnetischen Felddichte (58) in Umfangsrichtung (x), pro Magnetpol (26) vorgesehen ist.

2. Elektrische Maschine nach Anspruch 1,
**dadurch gekennzeichnet,**
**dass** die FSPM-Maschine (16) mit Läufer (20) und Ständer (24) einschließlich der Permanentmagnete (38) aufweisenden Magnetpole (26) sowie Spulenwindungen (40) versehen ist, wobei die sich in Umfangsrichtung erstreckende Permanentmagnetanordnung (14) und/oder die Halbach-Array-Anordnung (42) an der FSPM-Maschine (16) zur Verstärkung des Magnetflusses der Permanentmagnete (38) der Magnetpole (26) angebracht ist.

3. Elektrische Maschine nach einem der voranstehenden Ansprüche,
**dadurch gekennzeichnet,**
**dass** die Halbach-Array-Anordnung (42), die sich in Umfangsrichtung erstreckende Permanentmagnetanordnung (14) und/oder die Flux-Switching-Maschineneinheit (16) ringförmig ausgebildet sind.

4. Elektrische Maschine nach einem der voranstehenden Ansprüche,
**dadurch gekennzeichnet,**
**dass** die Permanentmagnetanordnung (14) und/oder die Halbach-Array-Anordnung (42) um die Flux-Switching-Maschineneinheit (16) herum angeordnet sind.

5. Elektrische Maschine nach einem der voranstehenden Ansprüche,
**dadurch gekennzeichnet,**
**dass** sie als Innenläufermaschine (18) ausgebildet ist, bei der ein Läufer (20) innerhalb eines Ständers (24) läuft, der die sich in Umfangsrichtung erstreckende Permanentmagnetanordnung (14) und/oder die Halbach-Array-Anordnung (42) aufweist.

6. Elektrische Maschine nach Anspruch 5,
**dadurch gekennzeichnet,**
**dass** der Radius des Läufers (20) mehr als 65%, insbesondere zwischen ca. 75% und 80%, des Gesamtradius des Ständers (24) beträgt.

7. Elektrische Maschine nach einem der voranstehenden Ansprüche,
**dadurch gekennzeichnet,**
**dass** ein Ständer (24) mit mehreren, insbesondere im Wesentlichen U-förmigen, Ständersegmenten (32) aus magnetisch weichem Material mit Magneten (54, 38) dazwischen derart vorgesehen ist, dass die Magnete (54, 38) auf den beiden Seiten jedes Ständersegments (32) mit Polen gleicher Polarität zu dem Ständersegment (32) gerichtet sind, wobei die Halbach-Array-Anordnung (42) mit gleicher Polarität entlang der Ständersegmente (32) erstreckend angeordnet ist.

8. Elektrische Maschine nach einem der voranstehenden Ansprüche,
**dadurch gekennzeichnet,**
**dass** ein Ständer (24) mit mehreren Ständerpolen und Ständerschlitzen (28, 28a, 28b) zur Aufnahme von Spulen (30) vorgesehen ist.

9. Elektrische Maschine nach Anspruch 8,
**dadurch gekennzeichnet,**
**dass** das Halbach-Array (46a) pro Ständerpol zentriert zu einer durch das Zentrum eines Magneten (54) des Ständerpols definierten Ständerpolachse (68) oder Ständerpolmitte angeordnet ist, vorzugsweise derart, dass die Umfangslänge des Halbach-Arrays (46a) pro Ständerpol ca. zwischen einschließlich 25% bis 100% der Umfangslänge des zugeordneten Ständerpols beträgt, insbesondere ca. 35% bis 90%, mehr insbesondere ca. 45% bis 75%.

10. Elektrische Maschine nach Anspruch 8 und nach einem der Ansprüche 8 oder 9,
**dadurch gekennzeichnet,**
**dass** die Ständerschlitze (28, 28a, 28b) durch die Ständersegmente (32) gebildet sind und dass diejenigen Bereiche benachbarter Halbach-Arrays, die über den gleichen Ständerschlitz (28a) hinwegreichen, die gleiche Polarität aufweisen.

11. Luftfahrzeug, umfassend eine elektrische Maschine (10) nach einem der Ansprüche 1 bis 10 als Generator zum Erzeugen elektrischer Energie und/oder als Elektromotor.

12. Hybridantrieb für ein Luftfahrzeug, insbesondere für einen Hubschrauber, umfassend eine elektrische Maschine (10) nach einem der Ansprüche 1 bis 10.

13. Hubschrauber, umfassend einen Hybridantrieb nach Anspruch 12.

## Claims

1. Electric machine (10) having a flux switching machine unit (12) that is designed as an FSPM machine (16) with magnetic poles (26) including permanent magnets (16), and having a permanent magnet arrangement (14) extending in the peripheral direction,
**characterized in that**
said permanent magnet arrangement (14) which extends in the peripheral direction is formed by a peripherally extending Halbach array arrangement (42), wherein said Halbach array arrangement (42) comprises several Halbach arrays (46, 46a, 46b) and wherein one Halbach array (46, 46a, 46b) having a total length of one wavelength, i.e. a wavelength of the magnetic field density (58) in the peripheral direction (x), is provided for each magnetic pole (26).

2. Electric machine according to claim 1,
**characterized in that**
said FSPM machine (16) is provided with a rotor (20) and stator (24), including said magnetic poles (26) having permanent magnets (38), as well as with coil windings (40), wherein said peripherally extending permanent magnet arrangement (14) and/or said Halbach array arrangement (42) is mounted on said FSPM machine (16), for augmenting the flux of the permanent magnets (38) of the magnetic poles (26).

3. Electric machine according to any one of the preceding claims,
**characterized in that**
said Halbach array arrangement (42), said peripherally extending permanent magnet arrangement (14) and/or said flux switching machine unit (16) are ringshaped.

4. Electric machine according to any one of the preceding claims,
**characterized in that**
said permanent magnet arrangement (14) and/or said Halbach array arrangement (42) are disposed around said flux switching machine unit (16).

5. Electric machine according to any one of the preceding claims, **characterized in that**
the same is designed as an inner rotor machine (18) in which a rotor (20) runs inside a stator (24) that includes said peripherally extending permanent magnet arrangement (14) and/or said Halbach array arrangement (42).

6. Electric machine according to claim 6,
**characterized in that**
the radius of the rotor (20) amounts to more than 65%, preferably between about 75% and 80%, of the total radius of the stator (24).

7. Electric machine according to any one of the preceding claims,
**characterized in that**
a stator (24) having several, particularly substantially U-shaped stator segments (32) from a magnetically soft material with magnets (54, 38) therebetween is provided in such a manner that the magnets (54, 38) on both sides of each stator segment (32) having poles of the same polarity are directed toward said stator segment (32), the Halbach array arrangement (42) of the same polarity being arranged so as to extend along said stator segments (32).

8. Electric machine according to any one of the preceding claims,
**characterized in that**
there is provided a stator (24) having several stator poles and stator slots (28, 28a, 28b) for receiving coils (30).

9. Electric machine according to claim 8,
**characterized in that**
the Halbach array (46a) for each stator pole is arranged in a manner centered on a stator pole axis (68) defined by the center of a magnet (54) of the stator pole or the center of the stator pole, preferably in such a manner that the peripheral length of the Halbach array (46a) for each stator pole approximately amounts to 25% inclusive to 100% inclusive of the peripheral length of the associated stator pole, particularly to approximately 35% to 90% and still more particularly to approximately 45% to 75%.

10. Electric machine according to claim 8 and according to any one of the claims 8 or 9, **characterized in that**
the stator slots (28, 28a, 28b) are formed by the stator segments (32) and that those regions of adjacent Halbach arrays which extend over the same stator slot (28a) have the same polarity.

11. Aircraft, comprising an electric machine (10) according to any one of the claims 1 to 10 as a generator for generating electric energy and/or as an electric motor.

12. Hybrid drive for an aircraft, particularly for a helicopter, comprising an electric machine (10) according to any one of the claims 1 to 10.

13. Helicopter, comprising a hybrid drive according to claim 12.

## Revendications

1. Machine électrique (10) avec une unité de machine de type "Flux-Switching" (à commutation de flux) (12), qui est réalisée sous forme de machine FSPM (16) avec des pôles magnétiques (26) comportant des aimants permanents (38) et comportant un agencement d'aimants permanents (14) s'étendant en direction périphérique,
**caractérisée en ce que**
l'agencement d'aimants permanents (14) s'étendant en direction périphérique est formé par un agencement à réseau de Halbach (42) réalisé de manière à s'étendre en direction périphérique, dans lequel l'agencement à réseau de Halbach (42) comprend plusieurs réseaux de Halbach (46, 46a, 46b), et un réseau de Halbach (46, 46a, 46b) est prévu respectivement pour chaque pôle magnétique (26), présentant une longueur totale égale à une longueur d'onde, c'est-à-dire une longueur d'onde de la densité de champ magnétique (58) en direction périphérique (x).

2. Machine électrique selon la revendication 1,
**caractérisée en ce que** la machine FSPM (16) est pourvue d'un rotor (20) et d'un stator (24) y compris les pôles magnétiques (26) comportant des aimants permanents (38), ainsi que des spires de bobinage (40), dans laquelle l'agencement d'aimants permanents (14) s'étendant en direction périphérique et/ou l'agencement à réseau de Halbach (42) est rapporté sur la machine FSPM (16) pour renforcer le flux magnétique des aimants permanents (38) des pôles magnétiques (26).

3. Machine électrique selon l'une des revendications précédentes,
**caractérisée en ce que** l'agencement à réseau de Halbach (42), l'agencement d'aimants permanents (14) s'étendant en direction périphérique et/ou l'unité de machine "Flux-Switching" (16) sont réalisés sous forme annulaire.

4. Machine électrique selon l'une des revendications précédentes, **caractérisée en ce que** l'agencement d'aimants permanents (14) et/ou l'agencement à réseau de Halbach (42) sont agencés tout autour de l'unité de machine "Flux-Switching".

5. Machine électrique selon l'une des revendications précédentes, **caractérisée en ce qu'**elle est réalisée sous forme de machine à rotor intérieur (18), dans laquelle un rotor (20) circule à l'intérieur d'un stator (24), lequel comprend l'agencement d'aimants permanents (14) s'étendant en direction périphérique et/ou l'agencement à réseau de Halbach (42).

6. Machine électrique selon la revendication 5,
**caractérisée en ce que** le rayon du rotor (20) s'élève à plus de 65 %, en particulier entre environ 75 % et 80 % du rayon global du stator.

7. Machine électrique selon l'une des revendications précédentes,
**caractérisée en ce qu'**il est prévu un stator (24) comprenant plusieurs segments de stator (32) en particulier sensiblement en forme de U, en matériau magnétique doux et comprenant des aimants (54, 38) entre ceux-ci, de telle manière que les aimants (54, 38) sur les deux côtés de chaque segment de stator (32) sont orientés avec des pôles de même polarité vers le segment de stator (32), et l'agencement à réseau de Halbach (42) avec la même polarité est agencé en s'étendant le long des segments de stator (32).

8. Machine électrique selon l'une des revendications précédentes,
**caractérisée en ce qu'**il est prévu un stator (24) avec plusieurs pôles de stator et des fentes de stator (28, 28a, 28b) pour la réception de bobines (30).

9. Machine électrique selon la revendication 8,
**caractérisée en ce que** le réseau de Halbach (46a) pour chaque pôle de stator est agencé de manière centrée par rapport à un axe de pôle (68) ou un centre de pôle de stator, défini par le centre d'un élément (54) du pôle de stator, de préférence de telle façon que la longueur périphérique du réseau de Halbach (46a) s'élève, pour chaque pôle de stator, environ entre 25 % et 100 %, y compris, de la longueur périphérique du pôle de stator associé, en particulier environ 35 % à 90 %, et de manière plus particulière environ 45 % à 75 %.

10. Machine électrique selon la revendication 8 est selon l'une des revendications 8 ou 9,
**caractérisée en ce que** les fentes de stator (28, 28a, 28b) sont formées par les segments de stator (32), et **en ce que** celles des zones de réseau de H voisins qui s'étendent au-delà de la même fente de stator (28a) présentent la même polarité.

11. Aéronef, comprenant une machine électrique (10) selon l'une des revendications 1 à 10 à titre de générateur pour produire de l'énergie électrique et/ou à titre de moteur électrique.

12. Entraînement hybride pour un aéronef, en particulier pour un hélicoptère, incluant une machine électrique (10) selon l'une des revendications 1 à 10.

13. Hélicoptère incluant un entraînement hybride selon la revendication 12.
